# EUROPÄISCHE PATENTSCHRIFT

(11) **EP 2 059 408 B1**
(45) Veröffentlichungstag und Bekanntmachung des Hinweises auf die Patenterteilung: **14.09.2011**
(21) Anmeldenummer: 07786077.3
(22) Anmeldetag: 16.07.2007
(51) Int. Cl.: B60K 35/00

(54) **VERFAHREN ZUM ANZEIGEN VON INFORMATION IN EINEM KRAFTFAHRZEUG UND INFORMATIONSSYSTEM**
METHOD FOR DISPLAYING INFORMATION IN A MOTOR VEHICLE AND INFORMATION SYSTEM
PROCÉDÉ D'AFFICHAGE D'INFORMATIONS DANS UN VÉHICULE À MOTEUR ET SYSTÈME D'INFORMATIONS

(30) Priorität: 31.08.2006 DE 102006040947; 09.03.2007 DE 102007011542
(43) Veröffentlichungstag der Anmeldung: 20.05.2009
(73) Patentinhaber: Volkswagen Aktiengesellschaft, 38436 Wolfsburg (DE)
(72) Erfinder: WÄLLER, Christoph, 38102 Braunschweig (DE); FLIEGNER, Jens, 29399 Wahrenholz (DE)
(86) Internationale Anmeldenummer: PCT/EP2007/006275
(87) Internationale Veröffentlichungsnummer: WO 2008/025408

(56) Entgegenhaltungen:
- WO-A-2004/036286
- DE-A1-102005 025 102
- US-A1- 2003 007 227

## Beschreibung

Die vorliegende Erfindung betrifft ein Verfahren zum Anzeigen von Information in einem Kraftfahrzeug, umfassend eine Anzeigevorrichtung mit einem Display, mit dem für verschiedene Betrachtungswinkel verschiedene Inhalte anzeigbar sind. Ferner betrifft die Erfindung ein Informationssystem für Insassen eines Kraftfahrzeugs, umfassend eine Anzeigevorrichtung mit einem solchen Display und eine Steuereinrichtung, welche die Darstellung der von dem Display angezeigten Inhalte für zumindest zwei Betrachtungswinkel steuert.

Während einer Autofahrt muss sich der Fahrer auf das Lenken des Fahrzeugs konzentrieren, während dem Beifahrer häufig keine bestimmten Aufgaben zukommen. Diese Unterschiede in der Rollenverteilung können zu Unstimmigkeiten bei der Auswahl von Anzeigeinhalten auf im Fahrzeug angebrachten Displays führen. Der Fahrer benötigt fahrrelevante Informationen, wie z. B. die Kartenansicht einer Navigationseinrichtung, wohingegen der Beifahrer Interesse an der Anzeige von Unterhaltungsinhalten auf den Displays hat, wie z. B. Filmen oder einem TV-Programm.

Aus der DE 42 13 129 A1 ist ein Fahrerinformationssystem mit einem Bildschirm in einem Kraftfahrzeug bekannt. Der Bildschirm des Fahrerinformationssystems ist im Bereich der Mittelkonsole angeordnet und um eine senkrechte Achse schwenkbar. Die Wiedergabe auf diesem Bildschirm wird so gesteuert, dass Verkehrsinformationen angezeigt werden, wenn der Bildschirm zum Fahrerplatz hin ausgerichtet ist. In der auf dem Beifahrerplatz ausgerichteten Schwenkstellung des Bildschirms kann beispielsweise auch TV-Unterhaltung wiedergegeben werden.

Des Weiteren sind Flüssigkristalldisplays bekannt, bei denen durch eine optische Barriere dem Betrachter rechts und links der mittigen Sichtachse jeweils ein unterschiedliches Bild angezeigt wird. Derartige Displays werden z. B. von der Firma Sharp unter der Bezeichnung Dual-View-Displays vertrieben.

Es ist bekannt, derartige Dual-View-Displays in einem Kraftfahrzeug einzusetzen, um dem Fahrer andere Inhalte anzuzeigen als dem Beifahrer. Beispielsweise kann dem Fahrer die Anzeige eines Navigationssystems zur Verfügung gestellt werden, während der Beifahrer gleichzeitig einen Film betrachten kann.

Die DE 10 2005 025102 A1 beschreibt ein Bildschirmsystem, gemäβ dem Oberbegriff des Anspruchs 1 und 11, bei dem auf einem Display in einem Kraftfahrzeug für verschiedene Betrachtungswinkel verschiedene Inhalte angezeigt werden können. Dabei werden je ein unterschiedliches Fahrerseitenbild und Beifahrerseitenbild erzeugt, das von jeweils verschiedenen funktionalen Systemen, z.B. einem Navigationssystem und einem Fahrzeugunterhaltungssystem, über eine Bildschirmsteuerung bereitgestellt wird.

Es ist die Aufgabe der vorliegenden Erfindung, ein Verfahren zum Anzeigen von Information in einem Kraftfahrzeug und ein Informationssystem der eingangs genannten Art bereitzustellen, mit denen verschiedenen Fahrzeuginsassen Informationen je nach Bedarf flexibel, und der jeweiligen Rolle des Insassen angepasst, angezeigt werden können.

Erfindungsgemäß wird diese Aufgabe durch ein Verfahren mit den Merkmalen des Anspruchs 1 und ein Informationssystem mit den Merkmalen des Anspruchs 11 gelöst. Vorteilhafte Aus- und Weiterbildungen ergeben sich aus den abhängigen Ansprüchen.

Das erfindungsgemäße Verfahren ist dadurch gekennzeichnet, dass für einen ersten und einen zweiten Betrachtungswinkel gleiche Basisinformationen einer digitalen Kartendarstellung für eine Navigationsvorrichtung mit gleichem Maßstab und gleichem Umgebungsausschnitt dargestellt werden und dass nur für den ersten Betrachtungswinkel zusätzlich zu den Basisinformationen erste Zusatzinformationen und/oder nur für den zweiten Betrachtungswinkel zusätzlich zu den Basisinformationen zweite Zusatzinformationen dargestellt werden, die in den Basisinformationen der Kartendarstellung dargestellt werden. Die ersten und zweiten Zusatzinformationen unterscheiden sich, so dass ein Betrachter aus dem ersten Betrachtungswinkel und ein Betrachter aus dem zweiten Betrachtungswinkel jeweils die Basisinformationen sieht. Die Zusatzinformationen werden den Basisinformationen überlagert. Unter Zusatzinformation wird im Sinne der Erfindung auch eine abgeänderte Darstellung der Basisinformationen verstanden. Den beiden Fahrzeuginsassen, welche das Display über die beiden Betrachtungswinkel betrachten, wird durch die Basisinformation eine Diskussionsgrundlage für die Kommunikation gegeben. Hinsichtlich der Anzeige der Zusatzinformationen unterscheiden sich jedoch die Anzeigen für die beiden Betrachtungswinkel, so dass die Anzeige der Rolle des Fahrzeuginsassen angepasst werden kann.

In der Kartendarstellung für eine Navigationsvorrichtung werden beispielsweise für den ersten Betrachtungswinkel weniger Sonderziele, als für den zweiten Betrachtungswinkel dargestellt. Ferner können für den ersten Betrachtungswinkel andere Sonderziele, als für den zweiten Betrachtungswinkel dargestellt werden. Schließlich können für den ersten Betrachtungswinkel die Sonderziele größer dargestellt werden, als für den zweiten Betrachtungswinkel.

Das Display ist bei dem erfindungsgemäßen Verfahren so angeordnet, dass der Fahrer das Display aus dem ersten Betrachtungswinkel betrachtet und der Beifahrer aus dem zweiten Betrachtungswinkel. Auf diese Weise können dem Fahrer entsprechend seiner kognitiven Last weniger Sonderziele angezeigt werden und dem Beifahrer deutlich mehr. Durch die reduzierte Anzeige für den Fahrer erhöht sich die Sicherheit beim Führen des Fahrzeugs. Durch die unbeschränkte Anzeige der Sonderziele für den Beifahrer kann der Informationsgehalt gleichzeitig erhöht werden. Durch die an den Betrachtungswinkel angepasste Auswahl der angezeigten Sonderziele kann dem Umstand Rechnung getragen werden, dass sich Fahrer und Beifahrer für unterschiedliche Themen interessieren. Für den Fahrer kann es beispielsweise wichtiger sein, dass Tankstellen in der Kartendarstellung angezeigt werden, für den Beifahrer können Sonderziele zu Einkaufsmöglichkeiten oder Events wichtiger sein. Bei dem erfindungsgemäßen Verfahren werden die individuellen Interessen, sowohl des Fahrers als auch des Beifahrers, befriedigt, obwohl nur ein Display verwendet wird.

Die Anzeige der Sonderziele in unterschiedlicher Größe berücksichtigt, dass der Fahrer die Sonderziele schnell und eindeutig erkennen muss, wohingegen der Beifahrer sich mehr Zeit beim Ablesen des Displays lassen kann. Er kann lange visuell Fokussieren und somit auch kleiner dargestellte Sonderziele gut ablesen.

Gemäß einer weiteren Ausgestaltung des erfindungsgemäßen Verfahrens ist das Display berührüngsempfindlich und die Sonderziele können durch Berührung von zugeordneten Icons auf der Kartendarstellung ausgewählt werden. Falls die Icons der Sonderziele für den Fahrer größer dargestellt werden, kann er die Sonderziele leichter auswählen, ohne vom Lenken des Fahrzeugs abgelenkt zu werden. Andererseits können die Icons für den Beifahrer kleiner angezeigt werden, so dass ein optimiertes Layout angezeigt werden kann.

Gemäß einer weiteren Ausgestaltung des erfindungsgemäßen Verfahrens können alternativ oder zusätzlich zu dem berührungsempfindlichen Display die Sonderziele mittels zumindest eines abgesetzten Bedienelements ausgewählt werden. Das abgesetzte Bedienelement kann dabei z. B. die Auswahl von Schaltfeldern ermöglichen, die auf dem Display angezeigt werden.

Gemäß einer Weiterbildung des erfindungsgemäßen Verfahrens werden den Sonderziele zugeordnete auswählbare Zusatzinformationen nur für den zweiten-Betrachtungswinkel, d.h. für den Beifahrer, dargestellt. Der Beifahrer kann somit das Sonderziel über das berührungsempfindliche Display oder das abgesetzte Bedienelement anwählen und damit die Anzeige eines umfangreichen Menüs auslösen. Dieses Menü bleibt dem Fahrer verborgen, um ihn nicht abzulenken. Um die separate Nutzung desselben berührungsempfindlichen Displays bzw. derselben Anzeige für die Auswahl durch das abgesetzte Bedienelement zu realisieren, wird der bedienende Nutzer bzw. seine Sitzposition bei einer bevorzugten Ausgestaltung des Verfahrens identifiziert. Die separate Bedienung des Displays, insbesondere des berührungsempfindlichen Displays hat den Vorteil, dass die für den Fahrer irrelevanten Bedienvorgänge des Beifahrers die Anzeige des Fahrers nicht stören.

Beispielsweise lässt sich die Position eines Fingers des Fahrers oder Beifahrers durch eine kapazitive Kopplung zwischen dem Finger und einer bei einer Schaltzone angeordneten Empfangseinrichtung erfassen. Die Empfangseinrichtung ist vorzugsweise von der Anzeigevorrichtung, insbesondere von dem Display umfasst, so dass der Finger des Nutzers, der sich auf oder nur vor einer auf dem Display dargestellten Bedienfunktion befindet, detektiert wird. Dabei kann der Finger das Display berühren, dies ist jedoch nicht unbedingt erforderlich. Für die kapazitive Kopplung mit der Empfangseinrichtung reicht es aus, dass sich der Finger in einem gewissen Abstand vor dem Display befindet.

Ferner kann die Empfangseinrichtung von dem abgesetzten Bedienelement umfasst sein oder in der Nähe dieses Bedienelements angeordnet sein, wenn Bedienvorgänge über dieses Bedienelement ausgelöst werden können. Außerdem wäre es möglich, für verschiedene Fahrzeuginsassen separate abgesetzte Bedienelemente vorzusehen.

Die Sitzposition des Fahrers oder Beifahrers kann dadurch identifiziert werden, dass ein Identifikationscode mittels einer Elektrodeneinrichtung in den Körper des jeweiligen Nutzers kapazitiv eingekoppelt und bei der Empfangseinrichtung kapazitiv aus dem Körper des Nutzers ausgekoppelt wird. Dabei ist der Identifikationscode insbesondere nur dann in den Körper eines Nutzers kapazitiv einkoppelbar, wenn dieser auf einer der Elektrodeneinrichtung zugeordneten Sitzposition sitzt. Der Identifikationscode kann somit mittels quasi-elektrostatischer Felder über den Körper des Nutzers an die Empfangseinrichtung übertragen werden. Bei den Schnittstellen zwischen der Elektrodeneinrichtung und dem Nutzer sowie zwischen dem Nutzer und der Empfangseinrichtung kann jeweils eine Kondensatoreinrichtung verwendet werden, die in einem Schwingkreis eingebunden ist, der bei der Empfangseinrichtung als Parattetschwingkreis betrieben wird und bei der Elektrodeneinrichtung als Serienschwingkreis betrieben wird.

Der Identifikationscode kann beispielsweise den Nutzer und/oder die Sitzposition identifizieren. Es lässt sich somit eine nutzerselektive Bedienung realisieren. Ferner kann die Art der angezeigten Informationen für einen Betrachtungswinkel von dem Identifikationscode des Nutzers auf der diesem Betrachtungswinkel zugeordneten Sitzposition abhängen. Somit lässt sich bei dem erfindungsgemäßen Verfahren auch in Abhängigkeit von der Sitzposition entscheiden, ob bestimmte Informationen angezeigt werden dürfen. Beispielsweise kann es auf diese Weise ausgeschlossen werden, dass während der Fahrt des Fahrzeugs bei dem Betrachtungswinkel für den Fahrer ein Film angezeigt wird.

Gemäß einer weiteren bevorzugten Ausgestaltung des erfindungsgemäßen Verfahrens werden bestimmte, für den Fahrer relevante Zusatzinformationen nur für den ersten Betrachtungswinkel dargestellt. Für den Fahrer sind nämlich detaillierte Navigationshinweise, wie eine Pfeildarstellung oder Meterangaben deutlich wichtiger als für den Beifahrer. Ferner kann für den ersten Betrachtungswinkel eine reduzierte Kartendarstellung angezeigt werden und für den zweiten Betrachtungswinkel eine vollständige Kartendarstellung. Aufgrund der reduzierten Kartendarstellung kann sich nämlich der Fahrer beim ersten Blick auf die Karte unmittelbar orientieren. Dem Fahrer kann beispielsweise nur ein Orientierungskorridor angezeigt werden, bei dem irrelevante Straßenbereiche ausgeblendet sind. Da diese Reduktion der Straßen für den Beifahrer von geringerem Nutzen ist, wird dem Beifahrer die vollständige Straßenansicht dargestellt. Die Reduktion der Kartendarstellung hat somit den Vorteil, dass der Fahrer den Informationsinhalt schneller wahrnehmen kann.

Gemäß einer weiteren vorteilhaften Ausgestaltung des erfindungsgemäßen Verfahrens verändert sich die Detailtiefe für den ersten Betrachtungswinkel geschwindigkeitsabhängig. Beispielsweise können im Stand, sowohl Fahrer als auch Beifahrer, eine Darstellung mit der gleichen Detailtiefe erhalten. Während der Fahrt wird für den Betrachtungswinkel des Fahrers bei zunehmender kognitiver Belastung die Informationsdarstellung reduziert bzw. modifiziert. Es können beispielsweise weniger Elemente angezeigt werden. Ferner kann die Prägnanz erhöht werden. Die Darstellung für den Betrachtungswinkel des Beifahrers hinsichtlich Detailtiefe und Bedienungsumfang kann andererseits situationsunabhängig vollständig erhalten bleiben.

Des Weiteren werden bei dem erfindungsgemäßen Verfahren Warnmeldungen auf dem Display betrachtungswinkelabhängig angezeigt, um die Wahrnehmung sicherzustellen. Insbesondere fahrtrelevante Warnungen, die Verkehrsinformationen oder den Betriebszustand des Kraftfahrzeugs betreffen, werden als Zusatzinformation für den ersten Betrachtungswinkel, d. h. den Fahrer, dargestellt.

Das erfindungsgemäße Informationssystem ist dadurch gekennzeichnet, dass die Steuereinrichtung die Darstellung so steuert, dass für beide Betrachtungswinkel Basisinformationen darstellbar sind und dass nur für den ersten Betrachtungswinkel zusätzlich zu den Basisinformationen erste Zusatzinformationen und/oder nur für den zweiten Betrachtungswinkel zusätzlich zu den Basisinformationen zweite Zusatzinformationen darstellbar sind. Die Zusatzinformationen sind insbesondere überlagert darstellbar.

Gemäß einer bevorzugten Ausgestaltung des erfindungsgemäßen Informationssystems umfasst dieses insbesondere eine Navigationsvorrichtung, wobei die Basisinformationen eine Kartendarstellung für die Navigationsvorrichtung sind.

Das Display des Informationssystems bzw. der Navigationsvorrichtung kann berührungsempfindlich sein, wobei die Sonderziele durch Berührung von zugeordneten Icons auf der Kartendarstellung auswählbar sind.

Gemäß einer weiteren Ausgestaltung des erfindungsgemäßen Informationssystems umfasst dieses zumindest ein abgesetztes Bedienelement. Die Sonderziele können in diesem Fall alternativ oder zusätzlich mittels dieses abgesetzten Bedienelements ausgewählt werden. Bei dem abgesetzten Bedienelement handelt es sich insbesondere um ein mechanisches Bedienelement. Beispielsweise kann ein Drehschalter vorgesehen sein, durch den auf dem Display angezeigte Schaltelemente ansteuerbar und durch Drücken des Drehschalters auswählbar sind. Zusätzlich können um den Drehschalter herum separate Druckschalter angeordnet sein, wobei die Anordnung von Anzeigefeldern auf dem Display, die den Druckschaltern zugeordnet sind, zumindest schematisch der Anordnung der Druckschalter entspricht. Das erfindungsgemäße Informationssystem kann beispielsweise eine Multifunktionsbedienvorrichtung umfassen, wie sie in der EP 1 212 208 B1 beschrieben ist.

Gemäß einer bevorzugten Weiterbildung des Informationssystems ist dieses mit einem Geschwindigkeitsmesser gekoppelt. In diesem Fall ist die Detailtiefe der Darstellung für den ersten Betrachtungswinkel geschwindigkeitsabhängig von der Steuereinrichtung veränderbar.

Allgemein kann sich die Anzeige für den Fahrer von der Anzeige für den Beifahrer oder eines anderen Fahrzeuginsassen vorzugsweise nur dann unterscheiden, wenn die Geschwindigkeit des Fahrzeugs größer als 0 ist bzw. einen bestimmten Schwellwert überschreitet.

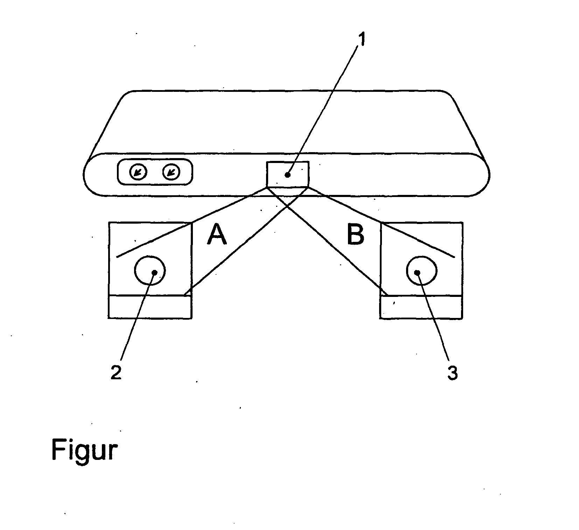

Die Erfindung wird nun anhand eines Ausführungsbeispiels mit Bezug zu der beigefügten Zeichnung erläutert.

Die Figur zeigt schematisch das Display eines Ausführungsbeispiels des erfindungsgemäßen Informationssystems relativ zu dem Fahrer und dem Beifahrer eines Kraftfahrzeugs.

Das im Folgenden beschriebene Ausführungsbeispiel für ein Informationssystem betrifft eine Navigationsvorrichtung für ein Kraftfahrzeug und ein Verfahren zum Anzeigen von Information für eine solche Navigationsvorrichtung. Die Erfindung ist jedoch nicht auf ein solches Informationssystem beschränkt. Vielmehr betrifft sie jede Art von Informationsdarstellung in einem Kraftfahrzeug, bei der mehreren Fahrzeuginsassen die gleichen Basisinformationen zur Verfügung gestellt werden sollen, denen in Abhängigkeit vom Betrachtungswinkel verschiedene Zusatzinformationen überlagert werden können.

Die Navigationsvorrichtung ist an sich bekannt. Sie umfasst eine Vorrichtung zum Bestimmen der Position des Kraftfahrzeugs, wie z. B. einen GPS (Global Positioning System)-Empfänger, einen Speicher, auf dem digitale Straßenkarten gespeichert sind, und eine Steuereinrichtung, welche die Signale des GPS-Empfängers so auswertet, dass auf einem Display eine Straßenkarte in der Umgehung der aktuellen Position angezeigt wird. Ferner können Zusatzinformationen, wie z. B. so genannte Points of Interest, als Icons in der digitalen Straßenkarte dargestellt werden.

Als Display wird z. B. ein Dual-View-Display der Firma Sharp verwendet, bei dem durch eine optische Barriere einem Betrachter rechts und links der mittigen Sichtachse jeweils unterschiedliche Inhalte anzeigbar sind. Die Anordnung des Displays 1 ist in der Figur gezeigt. Der Fahrer 2 des Kraftfahrzeugs betrachtet das Display 1 aus einem Betrachtungswinkel A, der Beifahrer 3 betrachtet das Display 1 aus einem Betrachtungswinkel B. Die optische Barriere des Displays 1 ist so angeordnet, dass man aus dem Bereich A eine andere Anzeige sieht, als aus dem Bereich B. Die Steuereinrichtung kann das für den ersten Betrachtungswinkel A dargestellte Bild separat von dem für den Betrachtungswinkel B dargestellte Bild steuern.

Die für die beiden Betrachter 2 und 3 dargestellten Inhalte werden von der Steuereinrichtung in drei Kategorien eingeteilt: Die erste Kategorie betrifft Basisinformationen, welche sowohl dem Fahrer 2 als auch dem Beifahrer 3 angezeigt werden sollen. Im beschriebenen Ausführungsbeispiel ist dies die Basiskartendarstellung der Navigationsvorrichtung. Der Maßstab und der angezeigte Umgebungsausschnitt ist für den Fahrer 2 und den Beifahrer 3 gleich. Auch führt eine an sich bekannte Steuerung dieser Parameter der Navigationsvorrichtung durch den Fahrer 2 oder Beifahrer 3 zu entsprechenden Änderungen der Darstellung für beide Fahrzeuginsassen. Diese Basiskartendarstellting bietet für beide Nutzer eine gemeinsame Gesprächsgrundlage und fördert somit die Kommunikation und soziale Interaktion im Fahrzeug mehr, als eine radikale Trennung von Anzeigeinhalten, wie sie im Stand der Technik vorgeschlagen wird.

Die zweite Kategorie betrifft Informationen, die nur dem Fahrer 2 angezeigt werden sollen. Sie werden daher der Basiskartendarstellung für den ersten Betrachtungswinkel A überlagert.

Die dritte Kategorie betrifft Informationen, die nur dem Beifahrer 3 dargestellt werden stollen. Sie werden entsprechend der Basiskartendarstellung für den zweiten Betrachtungswinkel B überlagert.

Die Darstellungen für den Fahrer 2 und den Beifahrer 3 unterscheiden sich dabei wie folgt:
Anzahl der angezeigten Sonderziele (Points of Interest): Der Fahrer 2 erhält entsprechend seiner kognitiven Last weniger Sonderziele angezeigt, als der Beifahrer 3.
Auswahl der angezeigten Sonderziele (Points of Interest): Dem Fahrer 2 werden bevorzugt fahrtrelevante Informationen, wie Verkehrsinformationen und Warnungen dargestellt, dem Beifahrer 3 nicht fahrtrelevante Informationen, wie Sonderziele zu Einkaufsmöglichkeiten und Events.

Größe der angezeigten Sonderziele (Points of Interest): Während der Beifahrer 3 sich bei der Bedienung mehr Zeit lassen kann und das Display lange visuell Fokussieren kann, muss es der Fahrer 2 schnell und eindeutig bedienen können. Zur Bedienung der Navigationsvorrichtung ist das Display als berührungsempfindliche Anzeige ausgestaltet. Die Icons zu den Sonderzielen werden auf dem berührungsempfindlichen Display 1 für den Fahrer 2 größer und somit besser "treffbar" angezeigt, als für den Beifahrer 3.

Öffnen eines Menüs zu einem Sonderziel für nur einen Nutzer: Der Beifahrer 3 kann ein Sonderziel über das zugeordnete Icon anwählen und somit ein umfangreicheres Menü öffnen. Dies bleibt dem Fahrer 2 jedoch verborgen, um ihn nicht abzulenken. D. h. dieses Menü wird für den Betrachtungswinkel A des Fahrers 2 nicht dargestellt.

Navigations-Overlays: Für den Fahrer 2 sind detaillierte Navigationshinweise, wie z. B. Pfeildarstellungen und Meterangaben, deutlich wichtiger als für den Beifahrer 3. Daher werden nur dem Fahrer 2 die Navigationshinweise in der Karte eingeblendet.

Anzahl der angezeigten Straßen: Für den Fahrer 2 ist es wichtig, sich beim Blick auf die Karte unmittelbar orientieren zu können. Aus diesem Grund werden bei der Anzeige für den Fahrer 2 gezielt irrelevante Straßenbereiche ausgeblendet und z. B. nur ein Orientierungskorridor angezeigt Da diese Reduktion der Straßen für den Beifahrer 3 geringere Nutzen hat, wird dem Beifahrer 3 die vollständige Straßenansicht angezeigt.

Die Navigationsvorrichtung 1 ist auf an sich bekannte Weise mit dem Geschwindigkeitsmesser des Kraftfahrzeugs verbunden. Die Steuereinrichtung wertet die Information des Geschwindigkeitsmessers für die Informationsdarstellung für den Fahrer 2 so aus, dass im Stand Fahrer 2 und Beifahrer 3 die gleiche Darstellung, insbesondere die gleiche Detailtiefe der Darstellung erhalten. Während der Fahrt wird in der Ansicht des Fahrers 2 bei zunehmender kognitiver Be- " lastung, d.h. bei zunehmender Geschwindigkeit, die Informationsdarstellung reduziert bzw. modifiziert. Es werden weniger Elemente, insbesondere weniger Sonderziele angezeigt. Ferner wird die Prägnanz der Darstellung der Sonderziele erhöht. Die Anzeige des Beifahrers 3 ist unabhängig von der Situation und der Geschwindigkeit. Dem Beifahrer 3 wird durchgehend der volle Informations- und Bedienumfang zur Verfügung gestellt.

Für die separate Nutzung desselben berührungsempfindlichen Displays für Bedienaufgaben, die den sichtbaren Elementen nur einer der beiden Seiten entsprechen, wird von der Navigationsvorrichtung eine Identifikation des bedienenden Nutzers bzw. seiner Sitzposition durchgeführt. Diese Identifikation des Nutzers bzw. seiner Sitzposition erfolgt beispielsweise wie folgt:

Im Sitz des Fahrers 2 befindet sich eine Elektrodenanordnung. Über diese Elektrodenanordnung kann ein Identifikationscode kapazitiv in den Körper des Fahrers 2 eingekoppelt werden. Der Identifikationscode kann dabei die Sitzposition des Nutzers 2 sowie den Nutzers 2 selbst identifizieren. Der Identifikationscode wird über den Körper des Fahrers 2 übertragen und bei der Fingerspitze kapazitiv ausgekoppelt, so dass er an eine in der Anzeigevorrichtung, insbesondere in dem Display 1 untergebrachte Empfangseinrichtung übertragen werden kann.

Die Empfangseinrichtung ist mit einer Steuereinrichtung verbunden, die wiederum mit der Elektrodeneinrichtung kapazitiv gekoppelt ist. Bei den kapazitiven Kopplungen zwischen der Elektrodeneinrichtung und dem Fahrer 2 einerseits und dem Fahrer 2 und der Empfangseinrichtung in der Anzeigevorrichtung andererseits wird ein elektrisches Feld mit einer sehr begrenzten Reichweite von z.B. einigen Zentimetern oder Dezimetern genutzt. Die Reichweite dieses Feldes bestimmt die Größe der Schaltzone vor der Fläche des Displays, bei der die Bedienfunktion angezeigt wird. Für die Signalübertragung werden relativ niedrige Trägerfrequenzen von einigen 100 kH genutzt, die zu quasi-statischen Feldern führen, d.h. Feldern, für welche weitgehend die für statische Felder zutreffenden physikalischen Ansätze gelten. Hinsichtlich weiterer Details dieser Signalübertragung wird auf die DE 10 2004 048 956 A1 und die darin zitierte weitere Literatur verwiesen, die hiermit durch Bezugnahme in die vorliegende Anmeldung aufgenommen werden. Es können insbesondere die in der DE 10 2004 048 956 A1 verwendeten Schaltungseinrichtungen Anwendung finden.

Die Erfassung des Beifahrers 3 bzw. die Identifikation seiner Sitzposition können ggf. auf gleiche Weise erfolgen, wie beim Fahrer 2. Bei der Betätigung einer Bedienfunktion liegt in der Steuervorrichtung somit die Information vor, von welcher Sitzposition aus ggf. welcher Nutzer welche Schaltzone betätigt hat.

Anstatt eines berührungsempfindlichen Displays 1 kann auch eine Bedieneinrichtung mit einem oder mehreren abgesetzten Bedienelementen verwendet werden. Durch die Bedienelemente können Schaltflächen, die auf dem Display dem Fahrer 2 und dem Beifahrer 3 oder nur dem Fahrer oder dem Beifahrer 3 angezeigt werden, angesteuert und ausgewählt werden. Beispielsweise kann ein Drehschalter mit Druckfunktion eingesetzt werden. Ferner könnte eine Multifunktionsbedienvorrichtung eingesetzt werden, wie sie in der EP 1 212 208 B1 beschrieben ist.

### Bezugszeichenliste

- 1: Display
- 2: Fahrer
- 3: Mitfahrer
- A: erster Betrachtungswinkel des Fahrers
- B: zweiter Betrachtungswinkel des Beifahrer

## Patentansprüche

1. Verfahren zum Anzeigen von Information in einem Kraftfahrzeug, umfassend eine Anzeigevorrichtung mit einem Display (1), mit dem für verschiedene Betrachtungswinkel verschiedene Inhalte anzeigbar sind, wobei für einen ersten Betrachtungswinkel (A) und einen zweiten Betrachtungswinkel (B) gleiche Basisinformationen einer digitalen Kartendarstellung für eine Navigationsvorrichtung mit gleichem Maßstab und gleichem Umgebungsausschnitt dargestellt werden,
**dadurch gekennzeichnet,**
**dass** nur für den ersten Betrachtungswinkel (A) zusätzlich zu den Basisinformationen erste Zusatzinformationen und/oder nur für den zweiten Betrachtungswinkel (B) zusätzlich zu den Basisinformationen zweite Zusatzinformationen dargestellt werden, die in den Basisinformationen der Kartendarstellung dargestellt werden.

2. Verfahren nach Anspruch 1,
**dadurch gekennzeichnet,**
**dass** für den ersten Betrachtungswinkel (A) weniger Sonderziele, als für den zweiten Betrachtungswinkel (B) dargestellt werden.

3. Verfahren nach Anspruch 1 oder 2,
**dadurch gekennzeichnet,**
**dass** für den ersten Betrachtungswinkel (A) andere Sonderziele als für den zweiten Betrachtungswinkel (B) dargestellt werden.

4. Verfahren nach einem der Ansprüche 1 bis 3,
**dadurch gekennzeichnet,**
**dass** für den ersten Betrachtungswinkel (A) die Sonderziele größer dargestellt werden als für den zweiten Betrachtungswinkel (B).

5. Verfahren nach einem der vorstehenden Ansprüche,
**dadurch gekennzeichnet,**
**dass** das Display (1) berührungsempfindlich ist und die Sonderziele durch Berührung von zugeordneten Icons auf der Kartendarstellung ausgewählt werden.

6. Verfahren nach einem der vorstehenden Ansprüche,
**dadurch gekennzeichnet,**
**dass** die Sonderziele mittels zumindest eines abgesetzten Bedienelements ausgewählt werden.

7. Verfahren nach Anspruch 5 oder 6,
**dadurch gekennzeichnet,**
**dass** den Sonderzielen zugeordnete auswählbare Zusatzinformationen nur für den zweiten Betrachtungswinkel (B) dargestellt werden.

8. Verfahren nach einem der vorstehenden Ansprüche,
**dadurch gekennzeichnet,**
**dass** bestimmte, für den Fahrer (2) relevante Zusatzinformationen nur für den ersten Betrachtungswinkel (A) dargestellt werden.

9. Verfahren nach einem der vorstehenden Ansprüche,
**dadurch gekennzeichnet,**
**dass** für den ersten Betrachtungswinkel (A) eine reduzierte Kartendarstellung angezeigt wird und für den zweiten Betrachtungswinkel (B) eine vollständige Kartendarstellung angezeigt wird.

10. Verfahren nach einem der vorstehenden Ansprüche,
**dadurch gekennzeichnet,**
**dass** die Detailtiefe für den ersten Betrachtungswinkel (A) geschwindigkeitsabhängig verändert wird.

11. Informationssystem für Insassen eines Kraftfahrzeugs, umfassend eine Anzeigevorrichtung mit einem Display (1), mit dem in Abhängigkeit vom Betrachtungswinkel verschiedene Inhalte anzeigbar sind, und eine Steuereinrichtung, welche die Darstellung der von dem Display (1) angezeigten Inhalte für zumindest zwei Betrachtungswinkel (A), (B) steuert, wobei die Steuereinrichtung die Darstellung so steuert, dass für beide Betrachtungswinkel (A, B) gleiche Basisinformationen einer digitalen Kartendarstellung für eine Navigationsvorrichtung mit gleichem Maßstab und gleichem Umgebungsausschnitt darstellbar sind,
**dadurch gekennzeichnet**
**dass** die Steuereinrichtung die Darstellung so steuert, dass nur für den ersten Betrachtungswinkel (A) zusätzlich zu den Basisinformationen erste Zusatzinformationen und/oder nur für den zweiten Betrachtungswinkel (B) zusätzlich zu den Basisinformationen zweite Zusatzinformationen darstellbar sind, die in den Basisinformationen der Kartendarstellung dargestellt werden.

12. Informationssystem nach Anspruch 11,
**dadurch gekennzeichnet,**
**dass** das Display (1) berührungsempfindlich ist und die Sonderziele durch Berührung von zugeordneten Icons auf der Kartendarstellung auswählbar sind.

13. Informationssystem nach Anspruch 11 oder 12,
**dadurch gekennzeichnet,**
**dass** das Informationssystem zumindest ein von dem Display (1) abgesetztes Bedienelement umfasst.

14. Informationssystem nach Anspruch 13,
**dadurch gekennzeichnet,**
**dass** die Sonderziele mittels des abgesetzten Bedienelements auswählbar sind.

15. Informationssystem nach einem der Ansprüche 11 bis 14,
**dadurch gekennzeichnet,**
**dass** das Informationssystem mit einem Geschwindigkeitsmesser gekoppelt ist und die Detailtiefe der Darstellung für den ersten Betrachtungswinkel (A) geschwindigkeitsabhängig von der Steuereinrichtung veränderbar ist.

## Claims

1. Method for displaying information in a motor vehicle, comprising a display device with a display (1) which can be used to display different contents for different viewing angles, the same basic information relating to a digital map display for a navigation device being displayed on the same scale and with the same section of the surrounding area for a first viewing angle (A) and a second viewing angle (B),
**characterized in that**
first additional information is displayed in addition to the basic information only for the first viewing angle (A) and/or second additional information is displayed in addition to the basic information only for the second viewing angle (B), said additional information being displayed in the basic information relating to the map display.

2. Method according to Claim 1,
**characterized in that**
fewer points of interest are displayed for the first viewing angle (A) than for the second viewing angle (B).

3. Method according to Claim 1 or 2,
**characterized in that**
points of interest other than those for the second viewing angle (B) are displayed for the first viewing angle (A).

4. Method according to one of Claims 1 to 3, **characterized in that**
the points of interest are displayed on a larger scale for the first viewing angle (A) than for the second viewing angle (B).

5. Method according to one of the preceding claims, **characterized in that**
the display (1) is touch-sensitive and the points of interest are selected by touching associated icons on the map display.

6. Method according to one of the preceding claims, **characterized in that**
the points of interest are selected using at least one separate operating element.

7. Method according to Claim 5 or 6,
**characterized in that**
selectable additional information associated with the points of interest is displayed only for the second viewing angle (B).

8. Method according to one of the preceding claims, **characterized in that**
particular additional information relevant to the driver (2) is displayed only for the first viewing angle (A).

9. Method according to one of the preceding claims, **characterized in that**
a reduced map display is displayed for the first viewing angle (A) and a complete map display is displayed for the second viewing angle (B).

10. Method according to one of the preceding claims, **characterized in that**
the level of detail for the first viewing angle (A) is changed on the basis of speed.

11. Information system for occupants of a motor vehicle, comprising a display device with a display (1) which can be used to display different contents depending on the viewing angle, and a control device which controls the process of displaying the contents displayed by the display (1) for at least two viewing angles (A) , (B), the control device controlling the display process in such a manner that the same basic information relating to a digital map display for a navigation device can be displayed on the same scale and with the same section of the surrounding area for both viewing angles (A, B),
**characterized in that**
the control device controls the display process in such a manner that first additional information can be displayed in addition to the basic information only for the first viewing angle (A) and/or second additional information can be displayed in addition to the basic information only for the second viewing angle (B), said additional information being displayed in the basic information relating to the map display.

12. Information system according to Claim 11, **characterized in that**
the display (1) is touch-sensitive and the points of interest can be selected by touching associated icons on the map display.

13. Information system according to Claim 11 or 12, **characterized in that**
the information system comprises at least one operating element which is separate from the display (1).

14. Information system according to Claim 13, **characterized in that**
the points of interest can be selected using the separate operating element.

15. Information system according to one of Claims 11 to 14,
**characterized in that**
the information system is coupled to a speedometer and the level of detail of the display process can be changed by the control device for the first viewing angle (A) on the basis of speed.

## Revendications

1. Procédé pour afficher des informations dans un véhicule automobile, comprenant un dispositif d'affichage muni d'un afficheur (1) qui permet d'afficher différents contenus pour différents angles d'observation, les mêmes informations de base d'une représentation de carte numérique pour un dispositif de navigation étant représentées avec la même échelle et la même section d'environnement pour un premier angle d'observation (A) et un deuxième angle d'observation (B),
**caractérisé en ce**
**que** des premières informations supplémentaires sont représentées en plus des informations de base uniquement pour le premier angle d'observation (A) et/ou des deuxièmes informations supplémentaires sont représentées en plus des informations de base uniquement pour le deuxième angle d'observation (B), lesquelles sont représentées dans les informations de base de la représentation de carte.

2. Procédé selon la revendication 1, **caractérisé en ce que** moins d'objectifs spéciaux sont représentés pour le premier angle d'observation (A) que pour le deuxième angle d'observation (B).

3. Procédé selon la revendication 1 ou 2, **caractérisé en ce que** des objectifs spéciaux différents sont représentés pour le premier angle d'observation (A) que pour le deuxième angle d'observation (B).

4. Procédé selon l'une des revendications 1 à 3, **caractérisé en ce que** les objectifs spéciaux sont représentés plus grands pour le premier angle d'observation (A) que pour le deuxième angle d'observation (B).

5. Procédé selon l'une des revendications précédentes, **caractérisé en ce que** l'afficheur (1) est sensible au toucher et les objectifs spéciaux sont sélectionnés en touchant les icônes associées sur la représentation de carte.

6. Procédé selon l'une des revendications précédentes, **caractérisé en ce que** les objectifs spéciaux sont sélectionnés au moyen d'au moins un élément de commande décalé.

7. Procédé selon la revendication 5 ou 6, **caractérisé en ce que** les informations supplémentaires sélectionnables associées aux objectifs spéciaux ne sont représentées que pour le deuxième angle d'observation (B).

8. Procédé selon l'une des revendications précédentes, **caractérisé en ce que** les informations supplémentaires pertinentes pour le conducteur (2) ne sont représentées que pour le premier angle d'observation (A).

9. Procédé selon l'une des revendications précédentes, **caractérisé en ce qu'**une représentation de carte réduite est affichée pour le premier angle d'observation (A) et une représentation de carte complète est affichée pour le deuxième angle d'observation (B).

10. Procédé selon l'une des revendications précédentes, **caractérisé en ce que** la profondeur de détail pour le premier angle d'observation (A) est modifiée en fonction de la vitesse.

11. Système d'information pour les occupants d'un véhicule automobile, comprenant un dispositif d'affichage muni d'un afficheur (1) qui permet d'afficher différents contenus en fonction de l'angle d'observation, et un dispositif de commande qui commande la représentation des contenus affichés par l'afficheur (1) pour au moins deux angles d'observation (A), (B), le dispositif de commande commandant la représentation de telle sorte que les mêmes informations de base d'une représentation de carte numérique pour un dispositif de navigation peuvent être représentées avec la même échelle et la même section d'environnement pour les deux angles d'observation (A, B),
**caractérisé en ce**
**que** le dispositif de commande commande la représentation de telle sorte que des premières informations supplémentaires peuvent être représentées en plus des informations de base uniquement pour le premier angle d'observation (A) et/ou des deuxièmes informations supplémentaires peuvent être représentées en plus des informations de base uniquement pour le deuxième angle d'observation (B), lesquelles sont représentées dans les informations de base de la représentation de carte.

12. Système d'information selon la revendication 11, **caractérisé en ce que** l'afficheur (1) est sensible au toucher et les objectifs spéciaux peuvent être sélectionnés en touchant les icônes associées sur la représentation de carte.

13. Système d'information selon la revendication 11 ou 12, **caractérisé en ce que** le système d'information comprend au moins un élément de commande décalé par rapport à l'afficheur (1).

14. Système d'information selon la revendication 13, **caractérisé en ce que** les objectifs spéciaux peuvent être sélectionnés au moyen de l'élément de commande décalé.

15. Système d'information selon l'une des revendications 11 à 14, **caractérisé en ce que** le système d'information est connecté avec un appareil de mesure de la vitesse et la profondeur de détail de la représentation pour le premier angle d'observation (A) peut être modifiée par le dispositif de commande en fonction de la vitesse.
